# EUROPÄISCHE PATENTSCHRIFT

(11) **EP 1 652 597 B1**
(45) Veröffentlichungstag und Bekanntmachung des Hinweises auf die Patenterteilung: **18.05.2011**
(21) Anmeldenummer: 05023809.6
(22) Anmeldetag: 01.11.2005
(51) Int. Cl.: B21D 26/14, B21D 53/88, B60R 19/34

(54) **Verfahren und Vorrichtung zur Herstellung eines Deformationselements**
Process and device for producing a deformation element
Procédé et dispositif pour la production d'un élément déformable

(30) Priorität: 01.11.2004 DE 102004053172
(43) Veröffentlichungstag der Anmeldung: 03.05.2006
(73) Patentinhaber: PST products GmbH, 63755 Alzenau (DE)
(72) Erfinder: Pasquale, Pablo, Dr., 63856 Bessenbach (DE)
(74) Vertreter: Pöhner, Wilfried Anton

(56) Entgegenhaltungen:
- GB-A- 2 371 614
- JP-A- 2004 042 066
- US-A1- 2006 284 432
- US-B1- 6 227 023

## Beschreibung

Die Erfindung betrifft ein Verfahren zur Herstellung eines Deformationselements für ein Kraftfahrzeug, wobei das Deformationselement unter Verwendung einer im wesentlichen rohrförmigen und/oder profilartigen und/oder konusförmigen Hohlkörperstruktur als Aufpralldämpfer zur definierten Energieaufnahme bei einem Aufprall mit Sollverformungsstrukturen hergestellt wird, eine Vorrichtung zur Herstellung eines Deformationselements für ein Kraftfahrzeug, wobei das Deformationselement unter Verwendung einer im wesentlichen rohrförmigen und/oder profilartigen und/oder konusförmigen Hohlkörperstruktur als Aufpralldämpfer zur definierten Energieaufnahme bei einem Aufprall mit Sollverformungsstrukturen hergestellt wird,

In Kraftfahrzeugen dienen Deformationselemente, wie beispielsweise in der EP 1 234 729 A1 dargestellt, dazu, die passiven Sicherheit zu erhöhen. Diese Energieverzehrelemente mit Strukturen zur Einleitung einer gezielten Sollverformung werden so eingesetzt, dass sie einen Teil der Aufprallenergie in Verformung umsetzen, wodurch die Karosserie und somit auch die Fahrzeuginsassen geschützt werden. Die äußeren Verformungsbereiche ("Knautschzone") sollen den Stoß beim Aufprall dämpfen, also das Fahrzeug sanft abbremsen. Die energieverzehrenden Deformationselemente sollen möglichst rasch, d.h. nach einem sehr kurzen Verformungsweg, das bei der Absorption zulässige Kraftniveau erreichen.

Die Herstellung derartiger Deformationsteile erfordert regelmäßig einen großen Aufwand in technischer und zeitlicher Hinsicht. Es werden dazu Teile des Deformationselements einzeln in mehreren Verfahren hergestellt und zusammengefügt, in der Regel geschweißt. Für verschiedene Fahrzeugtypen muss zudem jeweils eine spezielle Anpassung an die Anforderungen beispielsweise aufgrund der unterschiedlichen Fahrzeugträgertypen mit ihrer jeweils spezifisch unterschiedlichen Krafteinleitung hergestellt werden.

Als nachteilig erweist es sich, dass die Herstellung der Deformationselemente lange dauert und kostspielig ist.

Auf aktuellem Stand der Technik beschreibt die JP 2004042066 A die Anwendung eines gattungsgemäßen elektromagnetischen Pulsverformungsverfahrens für die Expansion von Rohren und zwar insbesondere deren Enden. Dafür werden massive Formen eingesetzt, die das zu verformende Teil auf ihrer Außenseite umgeben. Alle gezeigten Verformungsschritte geben eine Vergrößerung der Materialquerschnitte wieder.

Für die Herstellung eines Deformationselementes mit dem Eindrücken einiger, zueinander beabstandeter und um ein Rohr umlaufender Sicken ist dieses Verfahren jedoch nachteilig, da es eine Verformung der Bereiche zwischen den Sicken und damit des größeren Teil des Materials erfordert.

Nachteilig ist auch, dass es grundsätzlich eine Form erfordert.

Auch die GB 2 371 614 beschreibt die expansive Formung von Teilbereichen eines Rohres gegen eine außen liegende Form. Erwähnt wird eine komprimierende Formung mit einer einstückigen, innenliegenden Form. Damit sind längs des Rohres verlaufende Sicken einpressbar, weil sie durch eine Längsverschiebung in axialer Richtung ein Herausnehmen der Form ermöglichen.

Nachteilig ist, dass um das Rohr umlaufende Sicken nicht mit einer innen liegenden Form nach diesem Prinzip herstellbar sind.

Aufgabe der vorliegenden Erfindung ist es, ein Verfahren zur Herstellung eines Deformationselements mit den Merkmalen des Oberbegriffs des Anspruchs 1 anzugeben, wobei unter Vermeidung der Nachteile des Stands der Technik Deformationselemente mit einem geringen Aufwand und leichter Anpassung an verschiedene Kraftfahrzeugtypen herzustellen sind.

Die Aufgabe wird durch ein Verfahren gemäß Anspruch 1 und 2 gelöst.

Beim elektromagnetischen Pulsverformensverfahren wird die Kraftwirkung eines impulsförmigen Magnetfelds zur Beschleunigung und anschließenden Verformung von Deformationselementteilen aus elektrisch leitfähigem Material genutzt. Da das Magnetfeld elektrisch isolierende Materialien durchdringt, ist auch eine Bearbeitung nichtleitend beschichteter Elemente aus leitfähigem Material möglich. Die Verformung erfolgt dabei ohne Beschädigung der Oberflächen. Werkzeuge hierbei sind Spulen bzw. Feldübersetzer, die von einem Stromimpuls durchflossen ein pulsartiges magnetisches Feld erzeugen, das mittels Induktion und über die Erzeugung eines Wirbelstroms im Material auf die eingelegten, elektrisch leitfähigen Elemente eine pulsartige und abhängig von der Stromstärke sehr hohe Kraft ausübt. Es erfolgt eine sofortige plastische Verformung, wenn die Kraft über der Fließgrenze des Materials liegt. Die zum Feldaufbau notwendige elektrische Energie wird in großen Kondensatorbänken gespeichert. Je nach Konzipierung der Werkzeuge, der Auswahl der Werkstoffe und der Einstellung der Parameter kann mit diesem Verfahren geschweißt oder gefügt werden.

Die Grundform des energieaufnehmenden Deformationselements kann bei einer Bearbeitung mit dem erfindungsgemäß vorgeschlagenen Verfahren aus einer tubularen Struktur bestehen, einem Rohr oder einem Profil mit Längskanten. Zudem kann eine konische, rohrförmige oder profilartige Grundstruktur verwendet werden. Diese Grundstruktur wird durch elektromagnetisches Pulsverformen mit spezifischen Vertiefungen, Sicken und/oder Prägungen versehen, um ein spezifisches Energieaufnahmeverhalten zu erzielen. Die Verformung wird in Form einer auch teilweisen Kompression der tubularen Struktur vorgenommen .

Die Fertigung des Deformationselements kann sehr schnell vorgenommen werden. Das Verfahren ermöglicht die Herstellung einer Deformationsstruktur in einer sehr kurzen Prozessdauer. Ein Verformungsvorgang dauert jeweils ca. 0,1 s. Die Herstellung verläuft mittels einer sehr präzisen Formung, da es aufgrund des explosionsartigen Verformungsvorgangs nur eine minimale Rückfederung gibt. In sonst üblichen mechanischen Verformungsverfahren des Stands der Technik müssen die Hookschen Verformungskurven, die das Verformungsverhalten eines Werkstücks angeben, mit ihrem elastischen und einem plastischen Verformungsanteil durchlaufen werden, so dass eine Rückfederung und ein größeres Spiel einberechnet werden muss. Erfindungsgemäß hergestellte Deformationselemente weisen eine sehr konstante Wandstärke über die ganze Länge des Deformationselements auf mit geringen Toleranzen von etwa 0,2-0,5. Es erfolgt keine Werkstoffbeeinflussung im Gegensatz beispielsweise zu einem Herstellvorgang mittels thermischem Schneidens oder Schweißens. Es erfolgt kein thermischer Verzug und es ist kein Nachrichten notwendig. Der typische Schnittgrad, welcher bei allen mechanischen Schneidprozessen erzeugt wird und eine Nacharbeit erforderlich macht, ist hier nicht vorhanden.

Die ermöglicht eine sehr genaue Anpassung an das gewünschte Verformungsverhalten, es muss keine zusätzliche Dicke in der Wandstärke zur Gewährleistung hinzugegeben werden. Das erfindungsgemäße Verfahren ist sowohl bei zylindrischen, konischen Deformationselementstrukturen, als auch bei Flach- bzw. Blechumformungen realisierbar, sowohl als Einzelprozess als auch als kombinierter Prozess. Das Verfahren stellt eine hohe Wiederholgenauigkeit sicher.

Somit wird durch eine effiziente Leichtbaustruktur eine Reduzierung des Kraftstoffverbrauchs erreicht. Es ist auch möglich, die vorliegenden Deformationselemente als Crashmanagementsystem einzusetzen.

Auf zusätzliche, energieabsorbierende Materialien, beispielsweise Aluminiumschäume, kann verzichtet werden. Dies führt zu einer beträchtlichen Vereinfachung und Kostenreduktion, wobei eine gute passive Sicherheit gewährleistet ist.

Die Prägung kann auf einfache Wiese individuell auf die Bedürfnisse der Fahrzeughersteller ausgerichtet werden. Durch die einfache und schnelle Fertigung ist es möglich, in Form einer Modulbauwiese einen Einsatz des Deformationselements in einer leicht anpassbaren Einheitsstruktur für mehrere Fahrzeuge bereitzustellen.

Eine sehr gute homogene Krafteinleitung und Stabilität wird erreicht, wenn die Hohlkörperstruktur in Umfangsrichtung nahtlos geschlossen ist. Die Sollverformungsstrukturen werden im wesentlichen mittels eines konzentrisch wirkenden elektromagnetischen Pulsverformungsverfahrens angeformt, so dass die Hohlkörperstruktur mit den angeformten Sollverformungsstrukturen radial umlaufend nahtlos geschlossen sein kann. Dies hat für ein Deformationselement insbesondere den Vorteil, dass keine Schweißnähte entstehen, die beispielsweise zu einer unbeabsichtigt ungleichmäßigen Verformung führen können, und kein Wärmeverzug auftritt, der die Passgenauigkeit herabsetzt und/oder eine Nachbearbeitung erforderlich macht.

Eine gezielte, vorausberechenbare Verteilung der Kraftaufnahme wird erreicht, wenn Vertiefungen und/oder Sicken und/oder Prägungen und/oder Wülste eingeformt werden. Eine Einformung kann beispielsweise durch die Spulenkraft konzentrierende Feldformer vorgenommen werden, die in die felderzeugenden Spulen eingesetzt werden können. Eine Verwendung dieser Feldformerelemente bietet sich bei einem Kompressionsverfahren an, da dabei eine freie Verformung der eingesetzten tubularen Rohrstruktur in das Innere hinein erfolgen kann. Durch die Einformungen in der tubularen Struktur wird während der Krafteinleitung zugleich ein Faltbeulvorgang ausgelöst, der dafür sorgt, dass zu Beginn der Verformung des Deformationselements eine geringere Kraft notwendig ist, und somit die erste Energieübertragung nicht in die Träger sondern direkt in das Deformationselement erfolgt. Im ersten Abschnitt der bei Belastung resultierenden Kraft-Weg-Kurve wird ein maximales Kraftniveau nicht überschritten, um einen Längsträger der Karosseriestruktur nicht zu schädigen. Diese Verformungsstrukturen können mit dem vorgeschlagenen Verfahren besonders leicht und in vielfältigen Varianten eingebracht werden, so dass eine gute Anpassung der Verformungsstrukturen an gewünschte Krafteinleitungskurven eines Kraftfahrzeugtyps möglich ist. Die Feldformer zur Erzeugung des elektromagnetischen Pulses sind zu diesem Zweck so aufgebaut, dass über den Umfang entsprechend der Position der Verformungsstrukturen Verzahnungen angebracht sind. Durch gezielte Abstufung der Feldformerstege und somit mit variierendem Abstand zur umformenden tubularen Struktur können in einem Fertigungsvorgang Umfangssicken abgestuft oder umlaufend, in unterschiedlicher Tiefe in axialer Richtung eingebracht werden.

Ein definiertes, gut berechenbares Zusammenfalten der Ausbuchtungen ist möglich, wenn die Verformungen in Umfangsrichtung und/oder in Axialrichtung verlaufend ausgebildet werden.

Vorteilhaft ist es, wenn das Deformationselement mit einer in axialer Richtung variierenden Sickentiefe hergestellt wird. Die Vertiefungen können durchgehend oder unterbrochen in Umfangsrichtung einbracht werden, sowie mit variierend, angepassten Tiefen in axialer Richtung. Es werden im wesentlichen zwei Arten von Sicken eingebracht, Umlaufsicken und/oder abgestufte Sicken. Durch die Variation der Sickentiefe in axialer Richtung wird eine lokale Beeinflussung des Faltvorgangs in Richtung des Mittelpunkts des Hohlkörpers erreicht, somit kann eine symmetrisch oder asymmetrisch zur Hohlkörperstruktur verlaufende Steuerung der Verformung erfolgen und eine angepasste Ausbildung von Stabilitätsbereichen erreicht werden.

Eine bereichsweise Stabilisierung kann erreicht werden, wenn lokal über den Umfang verteilt Stege eingeformt werden, vorzugsweise in einem Umfangswinkelabstand von etwa 90°. Somit können zusätzlich oder alternativ zu den Vertiefungen oder Auswölbungen, insbesondere den Sicken, die den Faltvorgang während eines Aufpralls erleichtern sollen, auch lokal über den Umfang stabilisierende und kraftleitende Stege eingerbacht werden. Vorteilhaft werden vier Stege im Abstand von 90° eingebracht, die als Versteifungen in axialer Richtung dienen. Hierdurch wird der Verformungsvorgang in der Längsrichtung des Deformationselements gehalten.

Bei geringeren zu erwartenden Kräften ist es vorteilhaft, lokal über den Umfang verteilt Stege vorzugsweise in einem Umfangswinkelabstand von etwa 120° eingeformt werden. In dieser bevorzugten Ausführungsform sind drei Stege über den Umfang der Hohlkörperstruktur verteilt.

Vorteilhaft ist es, wenn die Hohlkörperstruktur an zumindest einem Ende offen ist. Durch die Verwendung einer profilartigen Hohlkörperstruktur ist es dem Anwender überlassen, je nach Einsatzbereich des Deformationselements, ein Ende offen zu lassen. Durch das erfindungsgemäße Herstellungsverfahren kann beliebig je nach Wunsch des Anwenders auch eine Ausführungsform gewählt werden, in der die Hohlkörperstruktur an beiden Enden offen ist. Die offenen Enden weisen keine für das Verformungsverfahren notwendige Form auf, sondern sind direkt nach der Verformung einsetzbar.

Vorteilhaft ist es, wenn zumindest ein Adaptionselement zur Anpassung und/oder Befestigung des Deformationselements an einem angrenzenden Träger mittels eines Pulsverbindungsverfahrens im wesentlichen in ein offenes Ende des Hohlkörpers des vorab und/oder im selben Prozess geformten Deformationselements integriert wird. In dem vorgeschlagenen Herstellungsverfahren für ein mit einem Biegeträger und/oder einem Längsträger verbundenes Deformationselement kann somit ein Hohlkörper mit Sollverformungsstrukturen versehen werden, sowie zugleich oder auch anschließend ein passendes Adaptionselement für die Befestigung an einem Träger eingebracht werden. Die Herstellung erfolgt mit Hilfe des elektromagnetischen Pulsschweißens oder Pulsformens durch ein Kompressionsverfahren , weil dabei ein leichte Formung der äußeren Randabschnitte der tubularen Struktur um die eingesetzten Adaptionen möglich ist.

Vorteilhaft ist es, wenn das Adaptionselement eine an den endseitigen Querschnitt des Hohlkörpers angepasste Form aufweist und durch umgreifende Umbördelung/Falzung eines endseitigen Randes des Hohlkörpers um einen Rand des Adaptionselements befestigt wird. Die Geometrie der Längsträger- und Biegeträgeradaptionen sowie der Fügebereiche sind dadurch so konzipiert, dass einerseits eine gute Krafteinleitung in die Struktur stattfinden kann und zugleich mögliche Relativbewegungen zwischen den Trägern und den Deformationselementen in Form von Schwingungen unterbunden werden können. Die Herstellung erfolgt im Kompressionsverfahren, insbesondere mit eingesetzten Feldformerstrukturen. Die Formung der Ränder geben den Adaptionen einerseits einen guten Halt und sind andererseits einfach zu fertigen. Die Adaptionen können eine nahezu beliebige Oberflächenstruktur aufweisen. Die darin bedarfsweise eingebrachten Haltebohrungen zur Befestigung der Adaptionen an der Längsträgern können einfach auf die entsprechenden Kraftfahrzeugmodelle abgestimmt werden. Insbesondere durch den Einsatz einer entsprechend angepasst langen umgebenden Kompressionsspule, die bedarfsweise mit einer entsprechenden Feldformerstruktur ausgestattet ist, ist das simultane Fügen oder Schweißen der genannten Längs- und Biegeträgeradaptionen möglich.

Eine sehr einfache und zugleich wirksame und stabile Verbindung wird hergestellt, wenn in die Hohlkörperstruktur eine Halterkonstruktion, insbesondere eine Ringnut eingebracht wird, die ein in die Hohlkörperstruktur eingepasstes Adaptionselement belastungssicher festsetzt. Hierdurch kann auch eine Beschädigung oder Beeinträchtigung der Festigkeit durch Schwingungen während der Fahrt unterbunden werden.

Eine gute Verdrehsicherheit sowie Absicherung gegen einen Einfluss von Fahrzeugschwingungen wird geliefert, wenn die Halterkonstruktion, insbesondere die Ringnut, umlaufend durchgehend oder unterbrochen eingebracht wird.

Ein schnelles und zugleich präzises Herstellungsverfahren liegt somit vor, wenn die Sollverformungsstrukturen in der Hohlkörperstruktur durch ein Kompressionsverfahren mit einer um die Hohlkörperstruktur angeordneten Spule sowie bedarfsweise eingesetzten Feldformerstrukturen im Sinne einer Freiumformung hergestellt wird.

Die Sollverformungsstrukturen werden in der Hohlkörperstruktur durch ein Kompressionsverfahren mit einer um die Hohlkörperstruktur angeordnete Spule und durch den Einsatz eines zusammengesetzten, in die Hohlkörperstruktur positionierten Dorns hergestellt. Der Dorn ist dabei zusammengesetzt, damit er sich nach der Verformung einfacher aus der angeformten Struktur entfernen lässt.

Insbesondere die Herstellung eines Deformationselements mit einem angepassten Adaptionselement kann somit vorteilhaft dadurch erreicht werden, dass zumindest ein auf die Hohlkörperstruktur aufgestecktes Adaptionselement pulsgefügt oder pulsgeschweißt wird. Die Herstellung der Hohlkörperstruktur kann in einem Schritt mit der Anpassung des Adaptionselements oder auch in zwei Schritten erfolgen.

Die Verbindung ist auch in einem zweistufigen Verfahren einfach möglich, da die geprägte Hohlkörperstruktur in der Pulsverformungseinrichtung verbleiben kann und die Adaption lediglich auf die Hohlkörperstruktur aufgesteckt wird und anschließend in derselben Pulsverformungseinrichtung mittels elektromagnetischem Pulsverformen und/oder Pulsschweißen und/oder Pulsformen insbesondere unter Verwendung von äußeren Feldformerstegen angeformt werden kann.

Die Adaptionen können denselben Werkstoff wie die Rohr- oder dem Profilwerkstoffe aufweisen oder auch einen anderen Werkstoff, der sich beispielsweise mit üblichen Schweißverfahren nicht verbinden lassen würde. So ist beispielsweise eine Anformung auf ein Kunststoffrohr möglich sowie die Realisierung von Hybridbauwiesen. Durch eine entsprechende Auswahl der Hohlkörperstrukturen ist sowohl eine Adaption zum Längs- und Biegeträger als auch eine Modularität in Form eines Einsatz für mehrere Kraftfahrzeug-Plattformen gewährleistet.

Vorteilhaft ist es, wenn zur Herstellung des Deformationselements und des Adaptionselements ein einheitlicher Werkstoff und/oder mehrere Werkstoffe in Hybridbauweise verwendet wird.

Vorteilhaft ist es, wenn die Werkstoffkombinationen Aluminium/Stahl oder Stahl/Kunststoff oder Aluminium/Kunststoff oder jeweils umgekehrt für die Deformationselement/Adaptionselementkombination verwendet werden.

Die Aufgabe wird ebenfalls gelöst durch eine Vorrichtung zur Herstellung eines Deformationselements für ein Kraftfahrzeug gemäß Anspruch 21.

Die Feldformer sind so aufgebaut, dass über den Umfang entsprechend der Position der Sicken bzw. Stege Verzahnungen angebracht sind. Durch gezielte Abstufung der Feldformerstege und somit mit variierendem Abstand zur umformenden tubularen Struktur können in einem Fertigungsvorgang die Umfangssicken, abgestuft oder umlaufend, in unterschiedlicher Tiefe in axialer Richtung eingebracht werden. Das Verformungswerkzeug wird dazu außen angebracht. Die Werkzeuge sind Spulen und Feldformer. Bei einer Freiumformung erfolgt die Umformung ohne eine äußere oder innere Matrize.

Vorteilhaft weist die Vorrichtung eine die Hohlkörperstruktur umgebende, längenmäßig mit der Hohlkörperstruktur korrespondierende Spule zur Kompression auf, wobei zwischen Spule und Hohlkörperstruktur mit entsprechenden Abstufungen versehene Feldformerstrukturen zur lokal unterschiedlichen Verformung der Hohlkörperstruktur angeordnet sind, insbesondere zur Verbindung der Hohlkörperstruktur mit einem in die Hohlkörperstruktur eingesetzten Adaptionselement.

Vorteilhaft ist es, wenn die Feldformerstege zur Herstellung der Sollverformungsstruktur eine variierende Tiefe zur Erzeugung von lokalen Feldschwankungen zur Herstellung von Sickenstrukturen aufweisen. Die Sickenstruktur im Deformationselement lässt sich somit auf einfache und schnelle Weise mittels eines einmaligen Einsatzes einer Vorrichtung erzeugen.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind. Es zeigen:

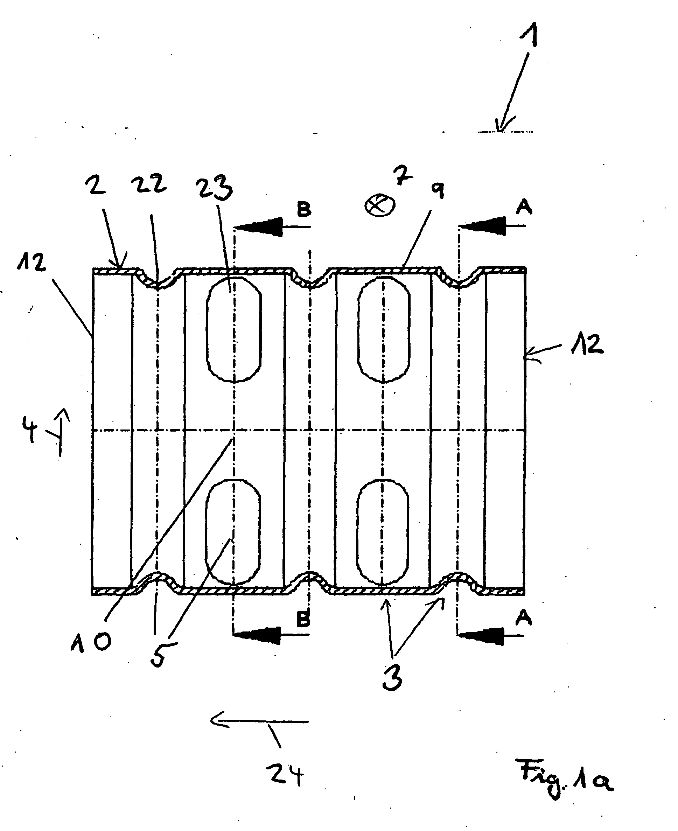

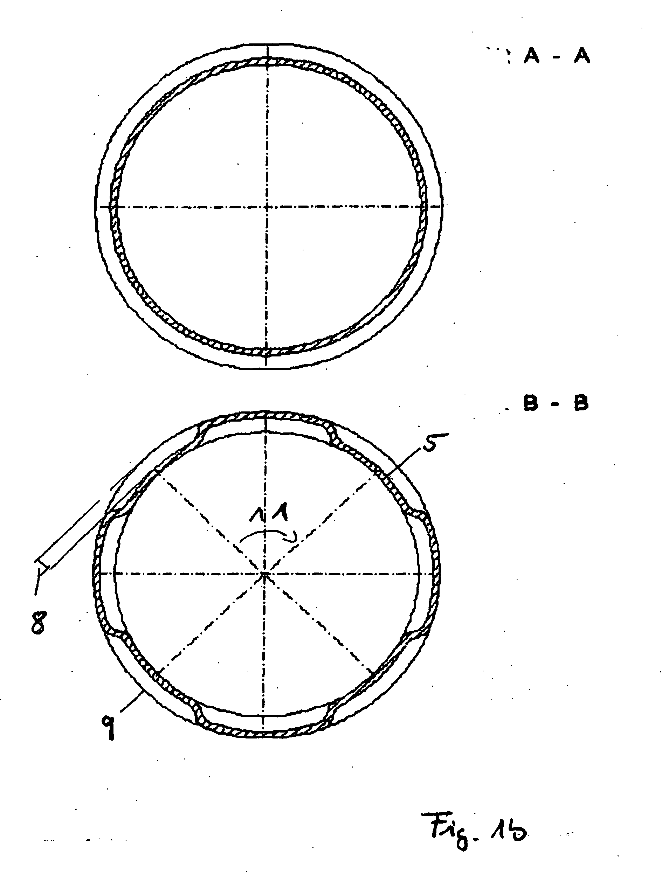

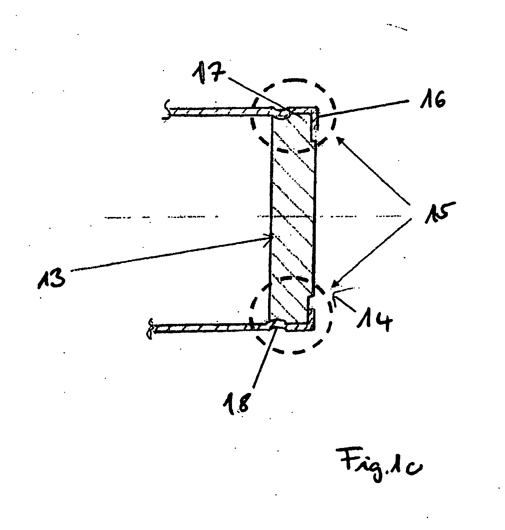

- Fig. 1 a: eine schematische Seitenansicht einer Hohlkörperstruktur eines Deformationselements mit Sollverformungsstrukturen.
- Fig. 1 b: einen Querschnitt durch eine Hohlkörperstruktur nach Fig. 1a,
- Fig. 1 c: einen Teil eines Längsschnitts durch ein Deformationselement,
- Fig. 2a: eine schematische Ansicht eines Querschnitts durch eine Vorrichtung zur Herstellung eines Deformationselements und
- Fig. 2b: eine schematische Ansicht eines Längsschnitts durch eine Vorrichtung nach Fig. 2a.

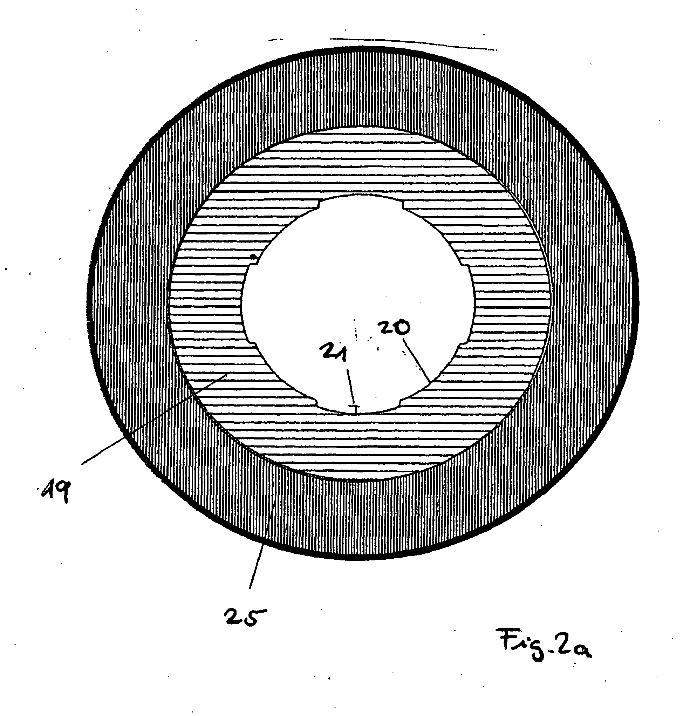

Fig. 1a zeigt eine schematische Seitenansicht einer Hohlkörperstruktur 2 eines Deformationselements 1 mit Sollverformungsstrukturen 3. Die Hohlkörperstruktur 2 ist aus einem Rohrprofil aufgebaut und mittels eines Pulsverformungsschrittes mit Sollverformungsstrukturen 3 versehen worden. Dazu wurde das Hohlrohr beispielsweise in eine Spulenanordnung mit Feldformerstegen entsprechend einer Form aus Fig. 2a dargestellt eingelegt und mittels eines Kompressionsverfahrens verformt. Die Hohlkörperstruktur 2 weist in Umfangsrichtung 4 verteilte Vertiefungen, Sicken 5, auf. Die dargestellte Ausführungsform zeigt drei ringförmig umlaufende, gleichmäßig in Längsrichtung 24 der Hohlkörperstruktur 2 beabstandete Umfangssicken, sowie zwei dazwischen liegende Reihen mit vier, gleichmäßig in Umfangsrichtung unterbrochene ovale Einzelsicken 23 mit dazwischen angeordneten Stegen 10 auf. Die Stege 10 sowie die Einzelsicken 23 haben jeweils einen Umfangswinkelabstand von etwa 90°. Diese Symmetrie der Hohlkörperstruktur 2 führt zu einer gleichmäßigen, nicht seitlich ausbrechenden Verformung im Fall eines Aufpralls. Durch die vierzählige Symmetrie ist eine besonders gute Verformbarkeit sowie durch die dazwischen angeordneten Umfangssicken 22 eine ausreichende Verformungsweite gegeben, so dass eine große Energiemenge aufgenommen werden kann.

Die Hohlkörperstruktur 2 weist zwei offene Enden 12 auf, in die Adaptionselemente 13, wie in Fig. 1c gezeigt, eingefügt werden können.

Fig. 1b zeigt Querschnitte entlang einer Querschnittslinie AA sowie BB durch eine Hohlkörperstruktur 2 nach Fig. 1a. Die Einzelsicken 23 sind in einem Umfangswinkelabstand 11 von etwa 90° angeordnet und weisen eine maximale Tiefe 8 auf. Der Übergang von einem Umfang 9 zu einer maximalen Sickentiefe 8 erfolgt vorzugsweise kontinuierlich, so dass bei der Verformung keine Spannungsspitzen auftreten.

Fig. 1c zeigt einen Teil eines Längsschnitts durch ein Deformationselement 1. Das Deformationselement besteht aus einer Hohlkörperstruktur 2 sowie angepasst eingeformten Adaptionen. Die Einformung der Adaptionselemente 13 erfolgt mitten eines Einsetzens der Adaptionselemente 13 in die offenen Enden 12 der Hohlkörperstruktur 2 sowie eine Pulsverformung des anliegenden Rohrrandes 16 um den Rand der Adaptionselemente 17. Auf diese Weise entsteht eine einfach herzustellende, aber zugleich sehr stabile Umbördelung/Falzung 15 der Ränder 16, die die Adaptionselemente 13 auch gegen einen Einfluss von Schwingungen beim Fahren sicher festlegt.

Fig. 2a zeigt eine schematische Ansicht eines Querschnitts durch eine Vorrichtung zur Herstellung eines Deformationselements 1. Die im Ausführungsbeispiel nicht dargestellte rohrfömige Hohlkörperstruktur 1 wird dazu in einen Feldformer 19 mit Feldformerstegen 20 eingelegt, der von einer äußeren Spule 25 umgeben ist. Sobald ein ausreichender pulsförmiger Spulenstrom angelegt ist, verformt sich die Hohlkörperstruktur 1 an den Bereichen der Feldformerstege 20 im Sinne einer Freiumformung durch die angreifenden Kräfte des magnetischen Feldes. Diese Kompression geschieht nahezu explosionsartige und somit sind auch die verhältnismäßig geringen Tiefen 8 der Sicken durch die Feldformerstege 20 mit den Tiefen 21 ohne Rückfederung zu erreichen.

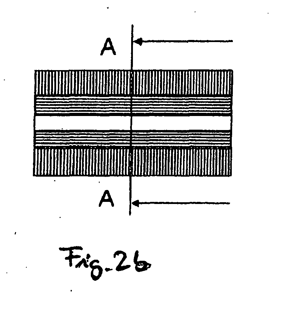

Fig. 2b zeigt eine schematische Ansicht eines Längsschnitts durch eine Vorrichtung nach Fig. 2a. Der Aufbau zeigt eine röhrenförmige Struktur und kann in seiner Länge und Breite nahezu beliebig variiert werden, um Deformationsstrukturen an unterschiedlichste Fahrzeugtypen anzupassen.

### BEZUGSZEICHENLISTE

- 1: Deformationselement
- 2: Hohlkörperstruktur
- 3: Sollverformungsstruktur
- 4: Umfangsrichtung
- 5: Sicke
- 6: Wulst
- 7: Axialrichtung
- 8: Sickentiefe
- 9: Umfang
- 10: Steg
- 11: Umfangswinkelabstand
- 12: Ende
- 13: Adaptionselement
- 14: Querschnitt
- 15: Umbördelung/Falzung
- 16: Rand
- 17: Rand
- 18: Halterkonstruktion
- 19: Feldformer
- 20: Feldformerstege
- 21: Tiefe
- 22: Umfangssicke
- 23: Einzelsicke
- 24: Längsrichtung
- 25: Spule

## Patentansprüche

1. Verfahren zur Herstellung eines Deformationselementes (1) für ein Kraftfahrzeug, wobei das Deformationselement (1) unter Verwendung einer im wesentlichen rohrförmigen und/oder profilartigen und/oder konusförmigen Hohlkörperstruktur (2) als Aufpralldämpfer zur definierten Energieaufnahme bei einem Aufprall mit Sollverformungsstrukturen (3) hergestellt wird, die in die Hohlkörperstruktur (2) im wesentlichen mittels eines elektromagnetischen Verformungsverfahrens mit einer Spule (25) eingeformt werden, wobei
das Verformungsverfahren ein Pulsverformungsverfahren ist
**dadurch gekennzeichnet, dass**
- die Sollverformungsstrukturen (3) in der Hohlkörperstruktur (2) mit einer um die Hohlkörperstruktur (2) angeordneten Spule (25) durch ein Kompressionsverfahren im Sinne einer Freiumformung hergestellt werden.

2. Verfahren zur Herstellung eines Deformationselementes (1) für ein Kraftfahrzeug, wobei das Deformationselement (1) unter Verwendung einer im wesentlichen rohrförmigen und/oder profilartigen und/oder konusförmigen Hohlkörperstruktur (2) als Aufpralldämpfer zur definierten Energieaufnahme bei einem Aufprall mit Sollverformungsstrukturen (3) hergestellt wird, die in die Hohlkörperstruktur (2) im wesentlichen mittels eines elektromagnetischen Verformungsverfahrens mit einer Spule (25) und einer zusammengesetzten Form eingeformt werden, wobei das Verformungsverfahren ein Pulsverformungsverfahren ist und - als Sollverformungsstrukturen (3) auch Vertiefungen und/oder Sicken (5) und/oder Prägungen und/oder Wülste (6) eingeformt werden, die in Umfangsrichtung (4) verlaufend ausgebildet werden
**dadurch gekennzeichnet, dass**
- die Sollverformungsstrukturen (3) in der Hohlkörperstruktur (2) mit einer um die Hohlkörperstruktur (2) angeordneten Spule (25) durch ein Kompressionsverfahren hergestellt werden, und zwar durch den Einsatz eines in die Hohlkörperstruktur (2) positionierten Dorns als Form,
wobei der Dorn derart zusammengesetzt ist, dass er sich nach der Verformung aus der angeformten Struktur entfernen lässt. den.

3. Verfahren nach Anspruch 1 oder 2, **dadurch gekennzeichnet, dass** die Hohlkörperstruktur (2) in Umfangsrichtung (4) nahtlos geschlossen ist.

4. Verfahren nach Anspruch 1, **dadurch gekennzeichnet, dass** Vertiefungen und/oder Sicken (5) und/oder Prägungen und/oder Wülste (6) eingeformt werden.

5. Verfahren nach einem der Ansprüche 1 bis 3, **dadurch gekennzeichnet, dass** die Verformungen in Umfangsrichtung (4) und/oder in Axialrichtung (7) verlaufend ausgebildet werden.

6. Verfahren nach einem der Ansprüche 1 bis 5, **dadurch gekennzeichnet, dass** das Deformationselement (1) mit einer in Axialrichtung (7) variierenden Sickentiefe (8) hergestellt wird.

7. Verfahren nach einem der Ansprüche 1 bis 6, **dadurch gekennzeichnet, dass** lokal über den Umfang (9) verteilt Stege (10) eingeformt werden, vorzugsweise in einem Umfangswinkelabstand (11) von etwa 90°.

8. Verfahren nach einem der Ansprüche 1 bis 7, **dadurch gekennzeichnet, dass** lokal über den Umfang (9) verteilt Stege (10) vorzugsweise in einem Umfangswinkelabstand (11) von etwa 120° eingeformt werden.

9. Verfahren nach einem der Ansprüche 1 bis 8, **dadurch gekennzeichnet, dass** die Hohlkörperstruktur (2) an zumindest einem Ende (12) offen ausgebildet wird.

10. Verfahren nach einem der Ansprüche 1 bis 9, **dadurch gekennzeichnet, dass** die Hohlkörperstruktur (2) an beiden Enden (12) offen ausgebildet wird

11. Verfahren nach einem der Ansprüche 1 bis 10, **dadurch gekennzeichnet, dass** zumindest ein Adaptionselement (13) zur Anpassung und/oder Befestigung des Deformationselements (1) an einem angrenzenden Träger mittels eines Pulsverbindungsverfahrens im wesentlichen in ein offenes Ende (12) der Hohlkörperstruktur (2) des vorab und/oder im selben Prozess geformten Deformationselements (1) integriert wird.

12. Verfahren nach einem der Ansprüche 1 bis 11, **dadurch gekennzeichnet, dass** das Adaptionselement (13) eine an den endseitigen Querschnitt (14) der Hohlkörperstruktur (2) angepasste Form aufweist und durch umgreifende Umbördelung/Falzung (15) eines endseitigen Randes (16) der Hohlkörperstruktur (2) um einen Rand (17) des Adaptionselements (13) befestigt wird.

13. Verfahren nach einem der Ansprüche 1 bis 12, **dadurch gekennzeichnet, dass** in die Hohlkörperstruktur (2) eine Halterkonstruktion (18), insbesondere eine Ringnut eingebracht wird, die ein in die Hohlkörperstruktur (2) eingepasstes Adaptionselement (13) belastungssicher festsetzt.

14. Verfahren nach einem der Ansprüche 1 bis 13, **dadurch gekennzeichnet, dass** die Halterkonstruktion (18), insbesondere die Ringnut, umlaufend durchgehend oder im wesentlichen regelmäßig unterbrochen eingebracht wird.

15. Verfahren nach einem der Ansprüche 1 bis 14, **dadurch gekennzeichnet, dass** zumindest ein auf die Hohlkörperstruktur (2) aufgestecktes Adaptionselement (13) pulsgefügt oder pulsgeschweißt wird.

16. Verfahren nach einem der Ansprüche 1 bis 15, **dadurch gekennzeichnet, dass** zur Herstellung des Deformationselements (1) und des Adaptionselements (13) ein einheitlicher Werkstoff und/oder mehrere Werkstoffe in Hybridbauweise verwendet wird.

17. Verfahren nach einem der Ansprüche 1 bis 16, **dadurch gekennzeichnet, dass** die Werkstoffkombinationen AluminiumlStahl oder Stahl/Kunststoff oder Aluminium/Kunststoff oder jeweils umgekehrt für die Deformalionselement (1)/Adaptionselement-(13)kombination verwendet werden.

18. Vorrichtung zur Herstellung eines Deformationselements (1) für ein Kraftfahrzeug, wobei das Deformationselement (1) unter Verwendung einer im wesentlichen rohrförmigen und/oder profilartigen und/oder konusförmigen Hohlkörperstruktur (2) als Aufpralldämpferzurdefinierten Energieaufnahme bei einem Aufprall mit Sollverformungsstrukturen (3) herzustellen ist, unter Anwendung eines Verfahrens nach einem der Ansprüche 1 bis 17 wobei die Vorrichtung für ein elektromagnetisches Pulsverformungsverfahren ausgebildet ist, **dadurch gekennzeichnet, dass** die Vorrichtung für eine Kompressionsverformung eine um die Hohlkörperstruktur angeordnete Spule sowie entweder zwischen der Spule und der Hohlkörperstruktur (2) angeordnete Feldformerstrukturen zur Verformung im Sinne einer Freiumformungseinrichtung oder einen zusammengesetzten, in der Hohlkörperstruktur (2) positionierten Dom aufweist.

19. Vorrichtung nach Anspruch 18, **dadurch gekennzeichnet, dass** sie eine die Hohlkörperstruktur umgebende, längenmäßig mit der Hohlkörperstruktur korrespondierende Spule zur Kompression aufweist, wobei zwischen Spule und Hohlkörperstruktur mit entsprechenden Abstufungen versehene Feldformerstrukturen zur lokal unterschiedlichen Verformung der Hohlkörperstruktur (2) angeordnet sind, insbesondere zur Verbindung der Hohlkörperstruktur mit einem in die Hohlkörperstruktur (2) eingesetzten Adaptionselement (13).

20. Vorrichtung nach Anspruch 18 oder 19, **dadurch gekennzeichnet, dass** die Feldformerstege (20) zur Herstellung der Sollverformungsstruktur (3) einevariierende Tiefe (21) aufweisen.

## Claims

1. Method for producing a deformation element (1) for a motor vehicle, said deformation element (1) being produced using an essentially tubular and/or profiled and/or conical hollow structure (2) as impact absorber for defined energy absorption in the event of an impact, and comprising predetermined deformation structures (3), which are formed in the hollow structure (2) essentially by means of an electromagnetic deformation process comprising a coil (25),
**characterised in that**
- the deformation process is a pulsed deformation process
- the predetermined deformation structures (3) in the hollow structure (2) are produced via a compression process in the sense of free forming, by means of a coil (25), which is disposed around the hollow structure (2).

2. Method for producing a deformation element (1) for a motor vehicle, said deformation element (1) being produced using an essentially tubular and/or profiled and/or conical hollow structure (2) as impact absorber for defined energy absorption in the event of an impact, and comprising predetermined deformation structures (3), which are formed in the hollow structure (2) essentially by means of an electromagnetic deformation process comprising a coil (25) and a composite die, **characterised in that**
- the deformation process is a pulsed deformation process, and
- depressions and/or corrugations (5) and/or embossments and/or beads (6), running in the circumferential direction (4), are also created as predetermined deformation structures (3)
- the predetermined deformation structures (3) in the hollow structure (2) are produced by means of a coil (25), which is disposed around the hollow structure (2), via a compression process, specifically by the use of a mandrel positioned in the hollow structure (2) as die,
said mandrel being composed such that it can be removed from the formed structure after forming.

3. Method according to claim 1, **characterised in that** the hollow structure (2) can be seamlessly closed in the circumferential direction (4).

4. Method according to claim 1, **characterised in that** depressions and/or beads (5) and/or embossments and/or beads (6) are formed.

5. Method according to one of claims 1 to 3, **characterised in that**, the deformations are created running in the circumferential direction (4) and/or in the axial direction (7).

6. Method according to one of claims 1 to 5, **characterised in that** the deformation element (1) is produced with a bead depth (8) that varies in the axial direction (7).

7. Method according to one of claims 1 to 6, **characterised in that** bridges (10) are formed locally around the circumference (9), preferably at a circumferential angular spacing (11) of about 90°.

8. Method according to one of claims 1 to 7, **characterised in that** bridges (10) are formed locally around the circumference (9), preferably at a circumferential angular spacing (11) of about 120°.

9. Method according to one of claims 1 to 8, **characterised in that** the hollow structure (2) is open at at least one end (12).

10. Method according to one of claims 1 to 9, **characterised in that** the hollow structure (2) is created such that it is open at both ends (12).

11. Method according to one of claims 1 to 10, **characterised in that** at least one adaptor element (13), for adapting and/or fixing the deformation element (1) on an adjacent carrier, is integrated by means of a pulsed joining method, essentially into an open end (12) of the hollow structure (2) of the deformation element (1), which has been preformed and/or formed in the same process.

12. Method according to one of claims 1 to 11, **characterised in that** the adaptor element (13) has a shape that is adapted to the end cross-section (14) of the hollow structure (2) and, through wrap-around flanging/folding (15) of one end rim (16) of the hollow structure (2), is fixed around one rim (17) of the adaptor element (13).

13. Method according to one of claims 1 to 12, **characterised in that** a retaining structure (18), in particular an annular groove, is introduced into the hollow structure (2), which robustly fixes an adaptor element (13) that is fitted into the hollow structure (2)..

14. Method according to one of claims 1 to 13, **characterised in that** the retaining structure (18), in particular the annular groove, is introduced such that it is circumferentially continuous or essentially regularly interrupted.

15. Method according to one of claims 1 to 14, **characterised in that** at least one adaptor element (13) that is plugged onto the hollow structure (2) is pulse joined or pulse welded.

16. Method according to one of claims 1 to 15, **characterised in that**, for producing the deformation element (1) and the adaptor element (13), a uniform material and/or a plurality of materials in a hybrid construction are used.

17. Method according to one of claims 1 to 16, **characterised in that** the material combinations aluminium/steel or steel/plastic or aluminium/plastic, or the converse in each case, are used for the deformation element (1)/adaptor element (13) combination.

18. Device for producing a deformation element (1) for a motor vehicle, the deformation element (1), using an essentially tubular and/or profiled and/or conical hollow structure (2) as impact absorber, for defined energy absorption in the event of an impact, comprising predetermined deformation structures (3), using a method according to one of claims 1 to 17, the device being designed for an electromagnetic pulse forming method, **characterised in that** the compression forming device comprises a coil disposed arranged around the hollow structure and either field forming structures disposed between the coil and the hollow structure (2) for forming in the sense of a free-forming device, or a composite mandrel positioned in the hollow structure (2).

19. Device according to claim 18, **characterised in that** it comprises a coil, which encircles the hollow structure and corresponds in length to the hollow structure, for compression, field forming structures provided between the coil and hollow structure, with corresponding gradations, for locally different deformation of the hollow structure (2), in particular for joining the hollow structure to an adaptor element (13) inserted into the hollow structure (2).

20. Device according to claim 18 or 19, **characterised in that** the field forming bridges (20) for producing the predetermined deformation structure (3) have varying depths (21).

## Revendications

1. Procédé destiné à la fabrication d'un élément de déformation (1) pour un véhicule, sachant que l'élément de déformation (1) est fabriqué en utilisant une structure de corps creux (2) ayant pour l'essentiel une forme de tube et/ou de type profilé et/ou une forme de cône en tant qu'amortisseur de collision destiné à une absorption définie d'énergie lors d'une collision avec des structures de déformation de consigne (3), qui sont formées dans la structure de corps creux (2), pour l'essentiel au moyen d'un procédé de déformation électromagnétique avec une bobine (25),
**caractérisé par** le fait
■ le procédé de déformation est un procédé de déformation par impulsions
■ que les structures de déformation de consigne (3) sont fabriquées dans la structure de corps creux (2) avec une bobine (25) disposée autour de la structure de corps creux (2), par un procédé de compression au sens d'une déformation libre.

2. Procédé destiné à la fabrication d'un élément de déformation (1) pour un véhicule, sachant que l'élément de déformation (1) est fabriqué en utilisant une structure de corps creux (2) ayant pour l'essentiel une forme de tube et/ou de type profilé et/ou une forme de cône en tant qu'amortisseur de collision destiné à une absorption définie d'énergie lors d'une collision avec des structures de déformation de consigne (3), qui sont formées dans la structure de corps creux (2), pour l'essentiel au moyen d'un procédé de déformation électromagnétique avec une bobine (25) et une forme assemblée,
**caractérisé par le fait**
■ **que** le procédé de déformation est un procédé de déformation par impulsions et
■ **que** des renfoncements et/ou des bordures (5) et/ou des estampages et/ou un bourrelet (6) sont formés, qui sont formés en suivant le sens de la circonférence,
■ les structures de déformation de consigne (2) étant fabriqués dans la structure de corps creux (2) avec une bobine (25) disposée autour de la structure de corps creux (2) par un procédé de compression, et à savoir à travers le recours à un mandrin positionné en tant que forme dans la structure de corps creux,
sachant que le mandrin est assemblé de façon pouvoir être retiré de la structure formée après la déformation.

3. Procédé conforme à la revendication 1, **caractérisé par le fait que** la structure de corps creux (2) est refermée sans soudure dans le sens de la circonférence (4).

4. Procédé conforme à la revendication 1, **caractérisé par le fait que** des renfoncements et/ou bordures et/ou estampages et/ou bourrelet (6) sont formés.

5. Procédé conforme à une des revendications 1 à 3, **caractérisé par le fait que** les déformations sont formées en suivant le sens de la circonférence (4) et/ou dans le sens axial (7).

6. Procédé conforme à une des revendications 1 à 5, **caractérisé par le fait que** l'élément de déformation (1) est fabriqué avec une profondeur de bordure (8) variant dans le sens axial (7).

7. Procédé conforme à une des revendications 1 à 6, **caractérisé par le fait que** des barres (10) réparties localement sur la circonférence (9) sont formées, de préférence à une distance d'angle de la circonférence (11) d'environ 90°.

8. Procédé conforme à une des revendications 1 à 7, **caractérisé par le fait que** des barres (10) réparties localement sur la circonférence (9) sont formées, de préférence à une distance d'angle de la circonférence (11) d'environ 120°.

9. Procédé conforme à une des revendications 1 à 8, **caractérisé par le fait que** la structure de corps creux (2) est formée de façon ouverte à au moins une extrémité (12).

10. Procédé conforme à une des revendications 1 à 9, **caractérisé par le fait que** la structure de corps creux (2) est formée de façon ouverte aux deux extrémités (12).

11. Procédé conforme à une des revendications 1 à 10, **caractérisé par le fait qu'**au moins un élément d'adaptation (13) destiné à adapter et/ou à fixer l'élément de déformation (1) à un support au moyen d'un procédé de liaison par impulsions dans au moins une extrémité ouverte (12) de la structure de corps creux (2) de l'élément de déformation (1) formé par avance et/ou dans le même process y est intégré.

12. Procédé conforme à une des revendications 1 à 11, **caractérisé par le fait que** l'élément d'adaptation (13) présente une forme adaptée à la section (14) côté extrémité de la structure de corps creux (2) et est fixée autour d'un bord (17) de l'élément d'adaptation (13).

13. Procédé conforme à une des revendications 1 à 12, **caractérisé par le fait qu'**une construction de fixation (18), notamment un circlip est inséré dans la structure de corps creux (2), lequel fixe l'élément d'adaptation (13) adapté dans la structure de corps creux (2).

14. Procédé conforme à une des revendications 1 à 13, **caractérisé par le fait que** la construction de fixation (18), notamment le circlip, est inséré sur tout le pourtour en continu, ou est pour l'essentiel régulièrement interrompu.

15. Procédé conforme à une des revendications 1 à 14, **caractérisé par le fait qu'**au moins un élément d'adaptation (13) enfiché sur la structure de corps creux (2) est inséré par impulsions ou soudé par impulsions.

16. Procédé conforme à une des revendications 1 à 15, **caractérisé par le fait qu'**on utilise, pour fabriquer l'élément de déformation (1) et l'élément d'adaptation (13) un matériau unique et/ou plusieurs matériaux en mode de construction hybride.

17. Procédé conforme à une des revendications 1 à 16, **caractérisé par le fait que** les combinaisons de matériaux aluminium/acier ou acier/plastique ou aluminium/plastique ou l'inverse dans chaque cas sont utilisées pour la combinaison élément de déformation (1) / élément d'adaptation (13).

18. Dispositif destiné à la fabrication d'un élément de déformation (1) pour un véhicule, sachant que l'élément de déformation (1) est fabriqué en utilisant une structure de corps creux (2) ayant pour l'essentiel une forme de tube et/ou de type profilé et/ou une forme de cône en tant qu'amortisseur de collision destiné à une absorption définie d'énergie lors d'une collision avec des structures de déformation de consigne (3), en recourant à un procédé selon les revendications 1 à 17, sachant que le dispositif est conçu pour un procédé électromagnétique de déformation par impulsions, **caractérisé par le fait que** le dispositif pour une déformation par compression présente une bobine disposée autour de la structure de corps creux ainsi que de structures de formage de champs destinées au formage au sens d'un dispositif de formage libre ou d'un mandrin assemblé positionné dans la structure de corps creux, disposées entre la bobine et la structure de corps creux (2).

19. Dispositif conforme à la revendication 18, **caractérisé par** le fait de présenter une bobine destinée à la compression entourant la structure de corps creux, et correspondant, au niveau de la longueur, à la structure de corps creux (2), sachant que plusieurs structures de formage de champs destinés à former localement de façon variée la structure de corps creux (2), et pourvues de gradations correspondantes, sont disposées entre la bobine et la structure de corps creux, notamment pour relier la structure de corps creux avec un élément d'adaptation (13) inséré dans la structure de corps creux (2).

20. Dispositif conforme à la revendication 18 ou 19, **caractérisé par le fait que** les bordures de formage de champ (20) destinées à fabriquer la structure de déformation de consigne (3) présentent une profondeur variable (21).
